# EUROPÄISCHE PATENTSCHRIFT

(11) **EP 2 096 059 B1**
(45) Veröffentlichungstag und Bekanntmachung des Hinweises auf die Patenterteilung: **19.09.2012**
(21) Anmeldenummer: 09153069.1
(22) Anmeldetag: 18.02.2009
(51) Int. Cl.: B65H 18/08, F16F 7/10, F16F 15/02

(54) **Rollenwicklerwalze und Rollenwickeleinrichtung**
Rolling coil roller and rolling coil device
Cylindre d'enrouleur de rouleaux et dispositif d'enrouleur de rouleaux

(30) Priorität: 26.02.2008 DE 102008011127
(43) Veröffentlichungstag der Anmeldung: 02.09.2009
(73) Patentinhaber: Voith Patent GmbH, 89522 Heidenheim (DE)
(72) Erfinder: Gnauert, Uwe, 37083, Göttingen (DE); Schiebler, André, 37170, Uslar Verliehausen (DE)

(56) Entgegenhaltungen:
- EP-A2- 1 857 389
- WO-A1-2007/113389
- DE-A1-102005 056 748
- GB-A- 2 072 629

## Beschreibung

Die Erfindung betrifft eine Rollenwicklerwalze mit einem Walzenkörper, in dem ein Schwingungstilger angeordnet ist.

Ferner betrifft die Erfindung eine Rollenwickeleinrichtung mit mindestens einer Rollenwicklerwalze.

Eine Rollenwicklennralze und eine Rollenwickeleinrichtung der eingangs genannten Art sind aus DE 10 2005 056 748 A1 bekannt. Der Schwingungstilger ist im Walzenkörper angeordnet. Er ist gebildet durch ein Feder-Masse-System, das einen Dämpfer aufweist. Über die Feder und den Dämpfer ist die Masse am Walzenkörper aufgehängt. Das System weist eine Eigenschwingung auf, die auf die im Betrieb zu erwartenden Schwingungsfrequenzen abgestimmt ist.

Aus der EP 1 857 389 A2 ist eine Doppeltragwalzen-Wickelmaschine zum Aufwickeln einer Materialbahn mit einer Antriebswalze bekannt, wobei die Antriebswalze einen drehbaren Walzenmantel und eine den Walzenmantel axial durchsetzende und feststehend ausgebildete Walzenachse umfasst. Die Antriebswalze weist einen innenliegenden, zwischen dem Walzenmantel und der Walzenachse angeordneten, einen Stator und einen Rotor aufweisenden Antriebsmotor auf, dessen Wicklungen derart asymmetrisch bestrombar sind, dass eine radiale Kraft (F) erzeugt wird, um Schwingungen zu dämpfen.

Die Erfindung wird im Folgenden am Beispiel einer Rollenwickeleinrichtung beschrieben, die zum Aufwickeln einer Papierbahn verwendet wird. Die Erfindung ist jedoch auch bei anderen Materialbahnen anwendbar, die auf ähnliche Weise zu Wickelrollen aufgewickelt werden müssen.

Papierbahnen werden in großer Breite von derzeit über 10 m und quasi endlos produziert. Um für einen späteren Verwender, beispielsweise eine Druckerei, handhabbar zu sein, müssen sie auf eine geringere Breite im Bereich von 0,2 bis 4,8 m geschnitten und dann zu Wickelrollen mit einem Durchmesser im Bereich von 0,5 bis 2,5 m aufgewickelt werden. Das Aufwickeln erfolgt dabei mit Geschwindigkeiten in der Größenordnung von 2000 bis 3000 m/min. Das Wickeln einer Wickelrolle dauert größenordnungsmäßig etwa 5 bis 15 Minuten, wobei in Abhängigkeit vom Durchmesser Überschreitungen oder Unterschreitungen dieser Zeiten möglich sind.

Man hat nun beobachtet, dass beim Aufwickeln von bestimmten Materialien, insbesondere beim Wickeln von Papierbahnen mit einem hohen Haftreibwert, Schwierigkeiten auftreten. Dies gilt insbesondere dann, wenn der Haftreibwert der Papierbahnlagen untereinander größer ist als 0,5, insbesondere den Wert 0,7 und mehr erreicht. Beim Wickeln solcher Materialbahnen kommt es häufig zu starken Vibrationen, die sich negativ auf die Wickelrolle auswirken. Zum Einen wird die Wickelrolle unrund, was sich bei der weiteren Bearbeitung als störend erweisen kann. Im Extremfall besteht sogar die Gefahr, dass die Wickelrolle aus der Rollenwickeleinrichtung ausgeworfen wird, was zu gefährlichen Situationen führt.

Der Erfindung liegt die Aufgabe zugrunde, Probleme beim Wickeln von Materialienbahnen mit hohem Haftreibwert zu vermindern.

Diese Aufgabe wird bei einer Rollenwicklerwalze der eingangs genannten Art dadurch gelöst, dass der Walzenkörper gegenüber dem Schwingungstilger drehbar ist.

Wenn der Walzenkörper gegenüber dem Schwingungstilger drehbar ist, dann kann man dafür sorgen, dass der Schwingungstilger im Betrieb, also wenn sich der Walzenkörper dreht, nicht oder nicht im gleichen Maße mitdreht. Dementsprechend kann man Probleme insbesondere dann vermeiden, wenn die Drehfrequenz des Walzenkörpers und die Abstimmungsfrequenz des Schwingungstilgers sehr nah beieinander liegen, was in vielen Rollenwickeleinrichtungen der Fall ist.

Vorzugsweise weist der Schwingungstilger eine nach außen geführte Drehmomentstütze auf. Der Schwingungstilger kann dann drehfest gehalten werden, rotiert also überhaupt nicht mit dem Walzenkörper mit. Die Wirkung des Schwingungstilgers kann dann auf einfache Weise auf eine Raumrichtung begrenzt werden. Dies ist von Vorteil, weil der größte Teil der Anregung, der die Rollenwicklerwalze im Betrieb ausgesetzt ist, ebenfalls nur aus einer Raumrichtung kommt. Ein feststehender Schwingungstilger hat darüber hinaus gegenüber einem mitdrehenden Tilger weitere Vorteile. Bei einem mitdrehenden Tilger kommt es aufgrund einer Materialanisotropie der Steifigkeit der elastischen Tilgeraufhängung zu einer ungewollten Erregung der halbkritischen Drehzahl des Tilgers. Durch die Anisotropie wird der Tilger zweimal pro Umdrehung der Walze leicht angeregt, was zu einer relativ starken Schwingung der Tilgermasse mit zweifacher Walzendrehfrequenz führt. Diese Anregung der Resonanzstelle kann in den Produktionsdrehzahlbereich der Wickeleinrichtung, die mit der Rollenwicklerwalze ausgerüstet ist, fallen und ist dann nicht mehr zu tolerieren. Die Anisotropie der Lagerung ist für einen mitrotierenden Tilger zwar durch eine hochpräzise Gestaltung der elastischen Aufhängungen der Tilgermasse zu umgehen. Dies ist jedoch unwirtschaftlich. Bei einem stehenden Schwingungstilger wird durch die unterdrückte Rotation der Tilgermasse die Erregung mit doppelter Drehfrequenz der Rollenwicklerwalze vollständig vermieden. Durch die stehende Anordnung der Tilgermasse wird eine Ankopplung der Rollenwicklerwalzenbewegungen, die durch gyroskopische Kräfte bei einer Bewegung der Tilgermasse im rotierenden System auftreten können, quer zur Kontaktstelle des Wickels vollständig unterdrückt.

Vorzugsweise weist die Drehmomentstütze eine Winkeleinstelleinrichtung auf. Man kann also die Wirkrichtung des Schwingungstilgers verändern. Insbesondere kann man dadurch die Wirkrichtung des Schwingungstilgers so einstellen, dass sie parallel zur Richtung der Anregung verläuft. Die Verstellung kann man auch im Betrieb vornehmen. So verschiebt sich beispielsweise bei einem Doppeltragwalzenwickler die Kontaktposition zwischen der als Tragwalze ausgebildeten Rollenwicklerwalze und der Wickelrolle mit zunehmendem Durchmesser. Die Schwingungsanregung erfolgt im Wesentlichen über die Kontaktposition und zwar in einer Ebene, die die Achsen der Rollenwicklerwalze und der Wickelrolle schneiden. Wenn man in der Lage ist, die Wirkrichtung des Schwingungstilgers in diese Ebene zu legen, erfolgt eine optimale Dämpfung oder sogar Tilgung der entstehenden Schwingungen.

Vorzugsweise weist der Schwingungstilger ein Gehäuse auf, das über zwei in Axialrichtung voneinander entfernte Lager im Walzenkörper gelagert ist. Der Schwingungstilger ist über die Lager an den Walzenkörper angekoppelt. Die Lager ermöglichen, dass sich der Walzenkörper gegenüber dem Schwingungstilger frei drehen kann. Dadurch, dass man mindestens zwei Lager vorsieht, kann man die Ankopplung praktisch frei von Kippmomenten halten, so dass die Wirkung des Schwingungstilgers in vollem Umfang auf den Walzenkörper übertragen werden kann.

Vorzugsweise weist der Schwingungstilger einen Beschleunigungssensor, eine Tilgermasse und einen auf die Tilgermasse wirkenden Aktuator auf. Man verwendet also nicht nur einen passiven Tilger, bei dem ein gedämpftes Feder-Masse-System die Schwingungsenergie sozusagen absorbiert, sondern man ist aufgrund des Beschleunigungssensors in der Lage, die Tilgermasse durch den Aktuator gegenphasig zur auftretenden Schwingung anzutreiben, um die Schwingungen des Walzenkörpers tatsächlich zu eliminieren. Natürlich kann auch ein derartiger aktiver Tilger eine gewisse Dämpfung aufweisen, wenn dies zweckmäßig ist.

Vorzugsweise weist der Schwingungstilger eine durch ein axiales Ende des Walzenkörpers hindurch verlaufende Energieversorgungsleitung auf. Bei dieser Leitung kann es sich beispielsweise um ein elektrisches Kabel handeln, das durch die Drehmomentstütze, die zu diesem Zweck hohl gebohrt sein kann, nach außen geführt ist. Über die Leitung können dann ausreichend große Energiemengen und/oder Signale von innen nach außen und von außen nach innen geführt werden, um die Masse über den Aktuator anzutreiben.

Die Aufgabe wird bei einer Rollenwickeleinrichtung der eingangs genannten Art dadurch gelöst, dass sie eine derartige Rollenwicklerwalze aufweist.

Vorzugsweise ist eine Auflagenip-Erfassungseinrichtung vorgesehen, die eine Umfangsposition ermittelt, an der eine Wickelrolle an der Rollenwicklerwalze anliegt. Damit ist man in der Lage, die Umfangsposition festzustellen, über die die Schwingungen von außen in die Rollenwicklerwalze eingetragen werden. Man kann dann den Schwingungstilger entsprechend ansteuern und optimal an die Schwingungsrichtung anpassen.

Vorzugsweise weist die Auflagenip-Erfassungseinrichtung einen Durchmessersensor auf, der den Durchmesser der Wickelrolle ermittelt. Aus dem Durchmesser der Wickelrolle lässt sich beispielsweise in einem Doppeltragwalzenwickler relativ genau die Position am Umfang der Rollenwicklerwalze bestimmen, an der die Wickelrolle in Kontakt mit der Rollenwicklerwalze steht. Ein Durchmessersensor ist in vielen Fällen ohnehin vorhanden. Man kann diesem Durchmessersensor noch eine zweite Funktion auferlegen oder die vom Durchmessersensor gewonnenen Daten einem weiteren Zweck zuführen.

Hierbei ist besonders bevorzugt, dass die Auflagenip-Erfassungseinrichtung mit der Winkeleinstelleinrichtung der Drehmomentstütze verbunden ist. Damit kann man die Wirkrichtung des Schwingungstilgers automatisch der Kontaktposition zwischen der Rollenwicklerwalze und der Wickelrolle nachführen, so dass die Wirkrichtung immer der Anregungsrichtung entgegengesetzt ist.

Die Erfindung wird im Folgenden anhand eines bevorzugten Ausführungsbeispiels in Verbindung mit der Zeichnung beschrieben. Hierin zeigen:

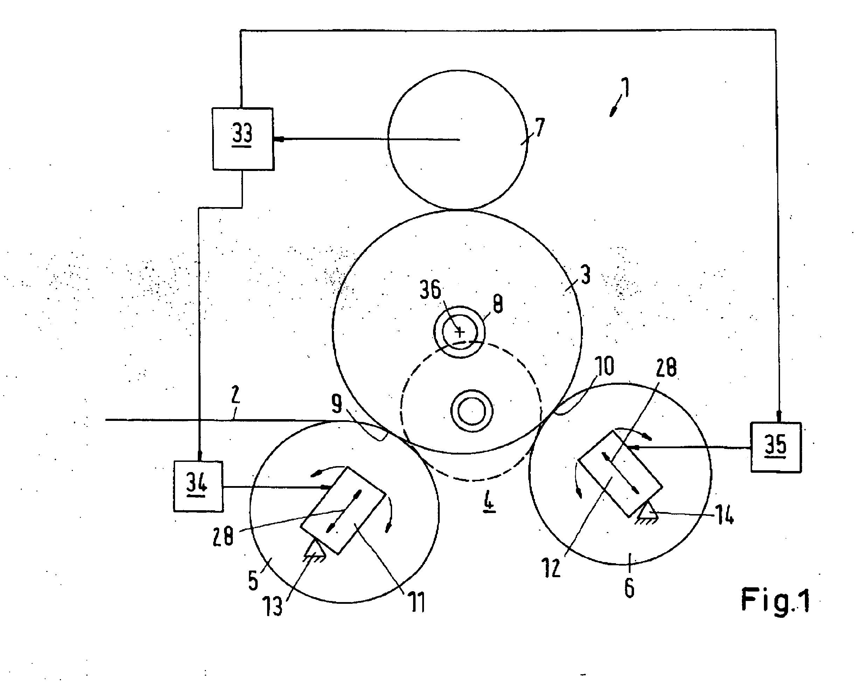

- Fig. 1: eine schematische Darstellung einer Rollenwi- ckeleinrichtung und
- Fig. 2: einen schematischen Längsschnitt durch eine Rollenwicklerwalze.

Eine Rollenwickeleinrichtung 1 dient zum Aufwickeln einer Papierbahn 2 zu einer Wickelrolle 3. Die Rollenwickeleinrichtung ist im vorliegenden Ausführungsbeispiel als Doppeltragwalzenwickler ausgebildet, bei dem die Wickelrolle 3 in einem Wickelbett 4 ruht, das durch zwei Tragwalzen 5, 6 gebildet ist. Mindestens eine der beiden Tragwalzen 5, 6, vorzugsweise aber beide Tragwalzen 5, 6, sind durch einen nicht näher dargestellten Motor angetrieben.

Die Wickelrolle 3 wird durch eine Belastungswalze 7 gegen die Tragwalzen 5, 6 gedrückt, was insbesondere zu Beginn eines Wickelvorganges wichtig ist, um eine ausreichende Wickelhärte zu erzeugen. Der Kern der Wickelrolle 3 wird durch eine Wickelhülse 8 gebildet. Der Abstand der beiden Tragwalzen 5, 6 ist hier aus Gründen der Übersicht übertrieben groß dargestellt.

In nicht näher dargestellter, aber an sich bekannter Weise können noch Längsschneideeinrichtungen vorhanden sein, mit deren Hilfe die zulaufende Papierbahn 2 in Teilbahnen geschnitten wird, die eine Breite im Bereich von 0,2 bis 4,8 m aufweisen.

Man kann nun beobachten, dass es insbesondere beim Wickeln von Papierbahnen 2, die einen hohen Haftreibbeiwert haben, zu Problemen kommt. Dies gilt insbesondere dann, wenn der Haftreibbeiwert der Papierlagen untereinander größer ist als 0,5, insbesondere den Wert 0,7 und mehr erreicht. Beim Wickeln solcher Papiere kommt es häufig zu starken Schwingbewegungen der Wickelrolle 3 und der Tragwalzen 5, 6. Derartige Schwingbewegungen sind aus mehreren Gründen unerwünscht. Zum Einen besteht die Gefahr, dass die Wickelrolle 3 aus dem Wickelbett 4 ausgeworfen wird. Zum Anderen kommt es zu Unrundheiten in der Wickelrolle 3, die sich wiederum störend auf die Weiterverarbeitung auswirken.

Die Belastungswalze 7 kann zwar das Auswerfen verhindern und in gewissen Bereichen auch zu einer Schwingungsdämpfung beitragen. Sie ist aber nicht in der Lage, Schwingungen so zu vermindern oder sogar zu verhindern, dass sie nicht mehr stören.

Die Schwingungsanregung beruht wahrscheinlich auf einem Selbsterregungseffekt auf der Wickelrolle 3. Bedingt durch einen hohen Haftreibwert der Papierlagen untereinander werden die üblichen Lagenverschiebungen beim Aufwickeln der Papierbahn 2 weitgehend unterdrückt. Dies hat zur Folge, dass sich dynamisch bedingte Wickelhärtedifferenzen am Umfang des Wickelrolle 3 einstellen, die zu Radienveränderungen am Umfang der Wickelrolle 3 führen, weil durch die fehlenden Lagenverschiebungen diese Wickelhärteunterschiede nicht ausreichend egalisiert oder verwischt werden.

Bei jeder dynamischen Wickelverformung an den Tragwalzen 4, 5 verbleibt ein kleiner Anteil an bleibender ortsfester Verformung, die dann beim Wiedereinlauf in eine Kontaktzone 9, 10 zwischen der Wickelrolle 3 und den Tragwalzen 5, 6 wie eine Wegerregung wirkt. Dieser regenerative Effekt führt beim Zusammentreffen einiger Harmonischen der Wickeldrehzahl mit bestimmten Eigenfrequenzen des Wickelsystems (Tragwalzen 5, 6 und Wickelrolle 3) zu einem Selbsterregungsprozess. Meist handelt es sich dabei um die Eigenfrequenzen, bei denen die Wickelrolle 3 selbst eine große dynamische Verformung erfährt, die im Grunde mit einem Federweg gleichzusetzen ist. Dies ist insbesondere bei den sogenannten Kontakteigenfrequenzen der Fall, bei denen die Tragwalzen 5, 6 und die Wickelrolle 3 in einer gegenphasigen Bewegung zueinander schwingen.

Um diesen Schwingungen entgegenzuwirken oder sie sogar zu tilgen, weist jede Tragwalze 5, 6 einen Schwingungstilger 11, 12 auf, der innerhalb der jeweiligen Tragwalze 5, 6 angeordnet und gegenüber einer Stuhlung undrehbar gehalten ist. Hierzu ist jeder Schwingungstilger 11, 12 mit einer Drehmomentstütze 13, 14 versehen.

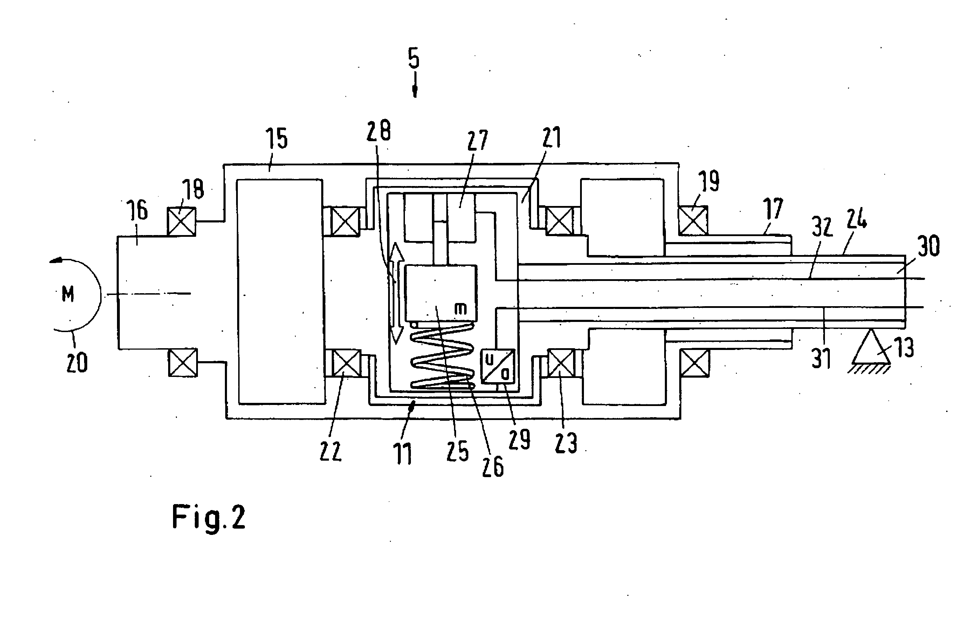

Fig. 2 zeigt schematisch den Aufbau einer Tragwalze 5. Die andere Tragwalze 6 ist in entsprechender Weise ausgebildet.

Die Tragwalze 5 weist einen Walzenkörper 15 auf, der an seinen beiden Enden jeweils Zapfen 16, 17 aufweist, mit denen die Tragwalze 5 über Lager 18, 19 in der nicht näher dargestellten Stuhlung gelagert ist. Ein schematisch dargestellter Antrieb 20 sorgt dafür, dass der Walzenkörper 15 rotieren kann.

Der Schwingungstilger 11 weist ein Gehäuse 21 auf, das über zwei Lager 22, 23 im Innern des Walzenkörpers 15 gelagert ist und zwar so, dass sich der Walzenkörper 15 frei gegenüber dem Schwingungstilger 11 drehen kann.

Um eine Drehung des Schwingungstilgers 11 zu verhindern, wenn sich der Walzenkörper 15 dreht, greift die Drehmomentstütze 13 an einem mit dem Gehäuse 21 verbundenen Fortsatz 24 an, der durch den Walzenzapfen 17 nach außen geführt ist. Der Walzenzapfen 17 ist zu diesem Zweck hohl gebohrt.

Der Schwingungstilger 11 weist im Gehäuse 21 eine Masse 25 auf, die sich über eine Feder 26 am Gehäuse 21 abstützt. Ferner ist ein Aktuator 27 vorgesehen, mit dem die Masse in Richtung des Doppelpfeiles 28 verlagert werden kann.
Ein Schwingungssensor 29 erfasst die Schwingungen des Gehäuses 21, die, da das Gehäuse 21 über die Lager 22, 23 an den Walzenkörper 15 gekoppelt ist, den Schwingungen des Walzenkörpers 15 entsprechen.

Der Fortsatz 24 weist einen Kanal 30 auf, durch den eine Signalleitung 31 vom Schwingungssensor nach außen und eine Energieversorgungsleitung 32 zum Aktuator 27 geführt ist. Beide Leitungen 31, 32 stehen mit einer nicht näher dargestellten Steuereinrichtung in Verbindung. Die Steuereinrichtung betätigt den Aktuator 27, der beispielsweise als Linearantrieb ausgebildet ist, in Abhängigkeit von den vom Schwingungssensor 29 ermittelten Schwingungen.

Der Schwingungstilger 11 ist sozusagen durch einen passiven Tilger gebildet, dessen Schwingbewegung durch den Aktuator 27 unterstützt wird. In diesem Fall kann die natürliche Schwingbewegung der Masse 25 durch den Aktuator 27 verstärkt werden. Durch die Verstärkung werden größere Massenkräfte über die Lager 22, 23 auf den Walzenkörper 15 übertragen. Diesen Effekt kann man dazu nutzen, die Masse 25 gegenüber der erforderlichen Masse eines rein passiv wirkenden Tilgers deutlich zu reduzieren. Andererseits kann die Aktuatorleistung in der Kombination mit einer passiv federnd abgestimmten Masse 25 deutlich kleiner geführt werden als ein alleiniger Aktuator, der sich nur an einer trägen Masse abstützt.

Die Schwingungsrichtung der Masse 25 bleibt, da das Gehäuse 21 drehfest gehalten ist, gleich. Sie ist bezogen auf die Darstellung der Fig. 2 parallel zur Zeichenebene gerichtet.
Die Rollenwickeleinrichtung 1 kann über die Position der Belastungswalze 7 fortlaufend den Durchmesser der Wickelrolle 3 ermitteln und damit die Position der Kontaktzonen 9, 10 zwischen der Wickelrolle 3 und den Tragwalzen 5, 6. Hierzu ist eine Auflagenip-Erfassungseinrichtung 33 vorgesehen, die wiederum mit einer Winkeleinstelleinrichtung 34, 35 verbunden ist. Mit Hilfe der Winkeleinstelleinrichtung 34, 35 wird die Wirkrichtung 28 der Schwingungstilger 11, 12 so ausgerichtet, dass sie dem steigenden Durchmesser der Wickelrolle 3 nachgeführt wird. Die Wirkrichtung 28 ist also immer zur Achse 36 der Wickelrolle 3 gerichtet und damit zu der jeweiligen Kontaktzone 9, 10. Damit können die Schwingungstilger 11, 12 genau den Anregungen entgegenwirken, die ansonsten zu einem Aufschwingen des Systems führen könnten.

Natürlich lässt sich ein derartiger Schwingungstilger 11, 12 auch bei einem Stütz- oder Kontaktwalzenwickler anwenden.

## Patentansprüche

1. Rollenwicklerwalze mit einem Walzenkörper, in dem ein Schwingungstilger angeordnet ist, **dadurch gekennzeichnet, dass** der Walzenkörper (15) gegenüber dem Schwingungstilger (11, 12) drehbar ist.

2. Rollenwicklerwalze nach Anspruch 1, **dadurch gekennzeichnet, dass** der Schwingungstilger (11, 12) eine nach außen geführte Drehmomentstütze (13, 14) aufweist.

3. Rollenwicklerwalze nach Anspruch 2, **dadurch gekennzeichnet, dass** die Drehmomentstütze (13, 14) eine Winkeleinstelleinrichtung (34, 35) aufweist.

4. Rollenwicklerwalze nach einem der Ansprüche 1 bis 3, **dadurch gekennzeichnet, dass** der Schwingungstilger (11, 12) ein Gehäuse (21) aufweist, das über zwei in Axialrichtung voneinander entfernte Lager (22, 23) im Walzenkörper (15) gelagert ist.

5. Rollenwicklerwalze nach einem der Ansprüche 1 bis 4, **dadurch gekennzeichnet, dass** der Schwingungstilger (11) einen Beschleunigungssensor (29), eine Tilgermasse (25) und einen auf die Tilgermasse (25) wirkenden Aktuator (27) aufweist.

6. Rollenwicklerwalze nach Anspruch 5, **dadurch gekennzeichnet, dass** der Schwingungstilger (11) eine durch ein axiales Ende des Walzenkörpers (15) hindurch verlaufende Energieversorgungsleitung (32) aufweist.

7. Rollenwickeleinrichtung mit mindestens einer Rollenwicklerwalze (5, 6) nach einem der Ansprüche 1 bis 6.

8. Rollenwickeleinrichtung nach Anspruch 7, **dadurch gekennzeichnet, dass** eine Auflagenip-Erfassungseinrichtung (33) vorgesehen ist, die eine Umfangsposition ermittelt, an der eine Wickelrolle (3) an der Rollenwicklerwalze (5, 6) anliegt.

9. Rollenwickeleinrichtung nach Anspruch 8, **dadurch gekennzeichnet, dass** die Auflagenip-Erfassungseinrichtung (33) einen Durchmessersensor aufweist, der den Durchmesser der Wickelrolle (3) ermittelt.

10. Rollenwickeleinrichtung nach Anspruch 8 oder 9,
**dadurch gekennzeichnet, dass** die Auflagenip-Erfassungseinrichtung (33) mit der Winkeleinstelleinrichtung (34, 35) der Drehmomentstütze (13, 14) verbunden ist.

## Claims

1. Reel-winding roll having a roll body in which there is arranged a vibration damper,
**characterized in that**
the roll body (15) can be rotated with respect to the vibration damper (11, 12).

2. Reel-winding roll according to Claim 1,
**characterized in that**
the vibration damper (11, 12) has a torque support (13, 14) led to the outside.

3. Reel-winding roll according to Claim 2,
**characterized in that**
the torque support (13, 14) has an angle setting device (34, 35).

4. Reel-winding device according to one of Claims 1 to 3,
**characterized in that**
the vibration damper (11, 12) has a housing (21) which is mounted in the roll body (15) via two bearings (22, 23) at a distance from each other in the axial direction.

5. Reel-winding roll according to one of Claims 1 to 4,
**characterized in that**
the vibration damper (11) has an acceleration sensor (29), a damper mass (25) and an actuator (27) acting on the damper mass (25).

6. Reel-winding roll according to Claim 5,
**characterized in that**
the vibration damper (11) has an energy supply line (32) running through one axial end of the roll body (15).

7. Reel winding device having at least one reel-winding roll (5, 6) according to one of Claims 1 to 6.

8. Reel winding device according to Claim 7,
**characterized in that**
**characterized in that** a supporting-nip detecting device (33) is provided, which determines a circumferential position at which a wound reel (3) rests on the reel-winding roll (5, 6).

9. Reel winding device according to Claim 8,
**characterized in that**
the supporting-nip detecting device (33) has a diameter sensor which determines the diameter of the wound reel (3).

10. Reel winding device according to Claim 8 or 9,
**characterized in that**
the supporting-nip detecting device (33) is connected to the angle setting device (34, 35) of the torque support (13, 14).

## Revendications

1. Cylindre d'enrouleur de rouleaux avec un corps de cylindre, dans lequel est disposé un amortisseur d'oscillations, **caractérisé en ce que** le corps de cylindre (15) peut tourner par rapport à l'amortisseur d'oscillations (11, 12).

2. Cylindre d'enrouleur de rouleaux selon la revendication 1, **caractérisé en ce que** l'amortisseur d'oscillations (11, 12) présente un appui de couple de rotation (13, 14) guidé vers l'extérieur.

3. Cylindre d'enrouleur de rouleaux selon la revendication 2, **caractérisé en ce que** l'appui de couple de rotation (13, 14) présente un dispositif de réglage d'angle (34, 35).

4. Cylindre d'enrouleur de rouleaux selon l'une quelconque des revendications 1 à 3, **caractérisé en ce que** l'amortisseur d'oscillations (11, 12) présente un boîtier (21), qui est monté dans le corps de cylindre (15) au moyen de deux paliers (22, 23) espacés l'un de l'autre en direction axiale.

5. Cylindre d'enrouleur de rouleaux selon l'une quelconque des revendications 1 à 4, **caractérisé en ce que** l'amortisseur d'oscillations (11) présente un détecteur d'accélération (29), une masse d'amortisseur (25) et un actionneur (27) agissant sur la masse d'amortisseur (25).

6. Cylindre d'enrouleur de rouleaux selon la revendication 5, **caractérisé en ce que** l'amortisseur d'oscillations (11) présente une ligne d'alimentation en énergie (32) s'étendant à travers une extrémité axiale du corps de cylindre (15).

7. Dispositif d'enrouleur de rouleaux avec au moins un cylindre d'enrouleur de rouleaux (5, 6) selon l'une quelconque des revendications 1 à 6.

8. Dispositif d'enrouleur de rouleaux selon la revendication 7, **caractérisé en ce qu'**il est prévu un dispositif de détection de contact d'appui (33), qui détermine une position périphérique à laquelle un rouleau (3) s'applique sur le cylindre d'enrouleur de rouleaux (5, 6).

9. Dispositif d'enrouleur de rouleaux selon la revendication 8, **caractérisé en ce que** le dispositif de détection de contact d'appui (33) présente un détecteur de diamètre, qui détermine le diamètre du rouleau (3).

10. Dispositif d'enrouleur de rouleaux selon la revendication 8 ou 9, **caractérisé en ce que** le dispositif de détection de contact d'appui (33) est relié au dispositif de réglage d'angle (34, 35) de l'appui de couple de rotation (13, 14).
